# EUROPEAN PATENT SPECIFICATION

(11) **EP 0 530 388 B1**
(45) Date of publication and mention of the grant of the patent: **22.06.1994**
(21) Application number: 91114713.0
(22) Date of filing: 02.09.1991
(51) Int. Cl.: A21C 3/06, A23P 1/08

(54) **Rolling machine**
Maschine zum Rundbiegen
Machine à rouler

(43) Date of publication of application: 10.03.1993
(73) Proprietor: FRISCO-FINDUS AG, CH-9400 Rorschach (CH)
(72) Inventor: Wikstroem, John Ivar Gustav, S-267 00 Bjuv (SE)

(56) References cited:
- FR-A- 1 440 770
- FR-A- 2 649 591
- GB-A- 2 021 924
- US-A- 3 757 676

## Description

According to the present invention there is provided a rolling machine which comprises an endless conveyor belt trained about end rollers characterised in that the upper run of the conveyor belt is formed with one complete spiral twist.

The position of the starting-point of the twist on the upper run of the conveyor belt may be controlled by a roller positioned below and contacting the upper run of the conveyor belt. The position of the end-point of the twist on the upper run may be controlled by an adjustable wheel pressing down on the upper surface of the upper run of the conveyor belt which also prevents the twist travelling around the downstream end roller. The adjustable wheel is preferably positioned adjacent a side edge of the upper surface so that it does not interfere with the rolled product. The wheel may be adjustable forwards, backwards or sideways.

Desirably, the lower run of the conveyor belt is also formed with one complete spiral twist in order to reorientate the belt. The position of the end point of the twist on the lower run may be controlled by a pair of rollers pinching the upper and lower surfaces of the lower run. These rollers also prevent the twist on the lower run travelling around the upstream end roller.

Advantageously movable rings are provided on either side of the end rollers which not only serve to retain the twisted belt in a fixed place but also enable the shape of the twist on the belt to be adjusted in order to optimise the rolling facility.

Preferably a second endless conveyor belt trained about end rollers is provided inside the endless conveyor belt formed with the spiral twist. This second belt provides a moving base for the conveyor belt formed with the spiral twist and preferably provides a non-fricitonal surface.

Advantageously, the non-driving end rollers of the two belts are adjustable.

The present invention also provides a process for rolling an article which comprises placing the article on the upper run of an endless conveyor belt at the upstream end and transporting the article to the downstream end characterised in that the upper run of the conveyor belt is formed with one complete spiral twist so that the article passes through the spiral twist and emerges folded at the downstream end.

The article should be flexible and the process of the invention is particularly suitable for rolling articles of food such as meat,cannelloni, crepes, pancakes, cooked cabbage leaves etc. The food product may be filled for instance by feeding a filling onto the article of food before it is transported through the spiral twist on the belt. Examples of filled products are paupiette and crepes and cooked cabbage leaves filled with minced meat.

The present invention will now be further illustrated by way of Example only with reference to the accompanying drawings in which
- Figure 1: is a top diagrammatic view of a conveyor belt according to this invention,
- Figure 2: is a sectional side view of the machine in more detail,
- Figure 3: is a top plan view of the machine of Figure 2 and
- Figure A-H: show step by step how the article of food rolls up around the filling

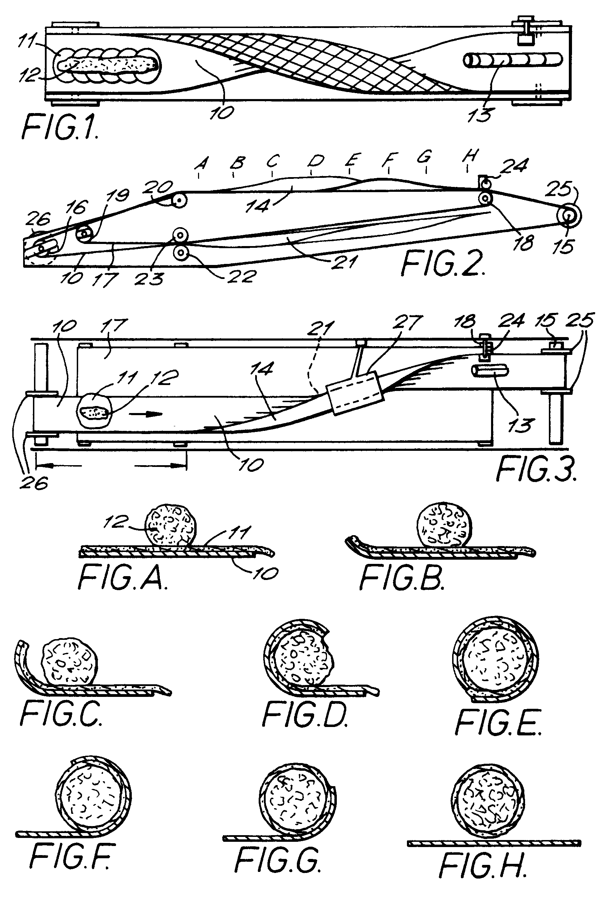

Figure 1 shows an endless conveyor belt 10 with a spiral twist, the lower surface of which is hatched, slices of meat 11 with filling 12 at the upstream end and the rolled product 13 at the downstream end.

In Figures 2 and 3, the rolling machine comprises a first belt 10 sufficiently plastic to form a complete twist 14 trained around rollers 15, 16 and a second belt 17 of conventional material trained around rollers 18, 19. A roller 20 is provided to prevent the twist 14 starting before the position of roller 20. The first belt 10 is formed with a second twist 21 on the lower run to reorientate it and lightly contacting rollers 22, 23 pinch the lower run to keep it flat and prevent the twist travelling around the end roller 16.

To prevent twist 14 from travelling around the drive roller 15 there is provided a small adjustable wheel 24 which presses against the upper surface of the belt 10. Two movable rings 25 on either side of the roller 15 and two rings 26 on either side of roller 16 are provided to adjust the shape of the twist 14 and to optimise the rolling facility. A guide or support 27 prevents expansion of the spiral twist.

The second belt 17 creates a moving base for the first belt 10 to prevent spillage of the products from belt 10 from causing problems. The drive roller 18 for the second belt is connected to the drive roller 15 for the first belt 10 by means of a chain (not shown) to a driving unit (not shown). The drive rollers 15, 18 are fixed and have the same speed. The end rollers 16, 19 are adjustable forwards and backwards to adjust the belts 10, 17.

Fig A-H relates to the letters A-H in Fig. 1. Each Fig A-H shows a section view corresponding to sections A-H in Fig. 1 through the food product with filling being rolled.
- Fig A: the cover product 11 is placed on the belt 10 and the filling 12 is placed on the cover product 11
- Fig B: the twist 14 is just to begin as one side of the belt 10
- Fig C: the cover product 11 is following the belt 10
- Fig D: the cover product 11 is surrounding the filling 12
- Fig E: the twist 14 is complete and the shape of the product 11 + 12 is perfect
- Fig F: the twist 14 of the belt 10 on its way back to normal shape
- Fig G: the belt 10 is continuing back to normal shape
- Fig H: the belt 10 has its normal shape, the product 11 + 12 has now a rolled shape and is ready for next operation e.g. packaging, cooking, freezing, cutting and so on.

## Claims

1. A rolling machine which comprises an endless conveyor belt (10) trained about end rollers (15,16) characterised in that the upper run of the conveyor belt is formed with one complete spiral twist (14).

2. A rolling machine according to claim 1 wherein a roller (20) is positioned below and contacting the upper run of the conveyor belt at the position of the starting-point of the spiral twist.

3. A rolling machine according to claim 1 wherein an adjustable wheel (24) presses down on the upper surface of the upper run of the conveyor belt at the position of the end-point of the spiral twist.

4. A rolling machine according to claim 3 wherein the adjustable wheel is positioned adjacent a side edge of the upper surface of the upper run of the conveyor belt.

5. A rolling machine according to claim 1 wherein the lower run of the conveyor belt is also formed with one complete spiral twist (21) in order to reorientate the belt.

6. A rolling machine according to claim 5 wherein a pair of rollers (22,23) pinch the upper and lower surfaces of the lower run of the conveyor belt at the position of the end-point of the spiral twist.

7. A rolling machine according to claim 1 wherein movable rings (25,26) are provided on either side of the end rollers which serve to retain the twisted belt in a fixed place and to enable the shape of the twist of the belt to be adjusted.

8. A rolling machine according to claim 1 wherein a second endless conveyor belt (17) trained about end rollers (18,19) is provided inside, and in order to provide a moving base for, the endless conveyor belt formed with the spiral twist.

9. A rolling machine according to claim 8 wherein the second belt has a non frictional surface.

10. A process for rolling an article (11) which comprises placing the article on the upper run of an endless conveyor belt (10) at the upstream end and transporting the article to the downstream end characterised in that the upper run of the conveyor belt is formed with one complete spiral twist (14) so that the article passes through the spiral twist and emerges folded at the downstream end.

11. A process according to claim 10 wherein the position of the starting-point of the spiral twist on the upper run of the conveyor belt is controlled by a roller (20) positioned below and contacting the upper run of the conveyor belt.

12. A process according to claim 10 wherein the position of the end-point of the spiral twist on the upper run of the conveyor belt is controlled by an adjustable wheel (24) pressing down on the upper surface of the upper run.

13. A process according to claim 10 wherein the belt is reorientated by means of the lower run also being formed with one complete spiral twist (21).

14. A process according to claim 13 wherein the position of the end-point of the spiral twist on the lower run is controlled by a pair of rollers (22,23) pinching the upper and lower surfaces of the lower run.

## Patentansprüche

1. Wickelmaschine mit einem um Endwalzen (15, 16) geführten endlosen Förderband (10), dadurch gekennzeichnet, daß die obere Bahn des Förderbandes mit einer vollständigen Spiralwindung (14) ausgebildet ist.

2. Wickelmaschine nach Anspruch 1, wobei eine Walze (20) unterhalb angeordnet ist und die obere Bahn des Förderbandes in einer Position am Startpunkt der Spiralwindung berührt.

3. Wickelmaschine nach Anspruch 1, wobei ein einstellbares Rad (24) auf die obere Oberfläche der oberen Bahn des Förderbandes in einer Position des Endpunkts der Spiralwindung niederdrückt.

4. Wickelmaschine nach Anspruch 3, wobei das einstellbare Rad in der Nähe einer Seitenkante der oberen Oberfläche der oberen Bahn des Förderbandes angeordnet ist.

5. Wickelmaschine nach Anspruch 1, wobei auch die untere Bahn des Förderbandes mit einer vollständigen Spiralwindung (21) ausgebildet ist, um das Band zurückzuorientieren.

6. Wickelmaschine nach Anspruch 5, wobei ein Walzenpaar (22, 23) die obere und untere Oberfläche der unteren Bahn des Förderbandes bei einer Position des Endpunktes der Spiralwindung einklemmt.

7. Wickelmaschine nach Anspruch 1, wobei bewegliche Ringe (25, 26) an jeder Seite der Endwalzen vorgesehen sind, die dazu dienen, das gewundene Band an Ort und Stelle zu halten und es ermöglichen, die Form der Windung des Bandes einzustellen.

8. Wickelmaschine nach Anspruch 1, wobei ein zweites endloses, um die Endwalzen (18, 19) geführtes Förderband (17) innerhalb des endlosen Förderbandes mit der Spiralwindung vorgesehen ist, um eine bewegliche Basis hierfür zu bilden.

9. Wickelmaschine nach Anspruch 8, wobei das zweite Band eine reibungsfreie Oberfläche aufweist.

10. Verfahren zum Wickeln eines Artikels (11), umfassend das Aufsetzen des Artikels auf die obere Bahn eines endlosen Förderbandes (10) am stromaufwärtigen Ende, und das Transportieren des Artikels zum stromabwärtigen Ende, dadurch gekennzeichnet, daß die obere Bahn des Förderbandes mit einer vollständigen Spiralwindung (14) ausgebildet ist, so daß der Artikel durch die Spiralwindung geführt wird, und umschlossen am stromabwärtigen Ende austritt.

11. Verfahren nach Anspruch 10, wobei die Position des Anfangspunktes der Spiralwindung der oberen Bahn des Förderbandes durch eine Walze (20) steuerbar ist, die unterhalb angeordnet ist und die obere Bahn des Förderbandes berührt.

12. Verfahren nach Anspruch 10, wobei die Position des Endpunktes der Spiralwindung der oberen Bahn des Förderbandes durch ein einstellbares Rad (24) steuerbar ist, das auf die obere Oberfläche der oberen Bahn niederdrückt.

13. Verfahren nach Anspruch 10, wobei das Band zurückorientiert wird, indem auch die untere Bahn mit einer vollständigen Spiralwindung (21) ausgebildet ist.

14. Verfahren nach Anspruch 13, wobei die Position des Endpunktes der Spiralwindung der unteren Bahn durch ein Walzenpaar (22, 23) steuerbar ist, das die obere und untere Oberfläche der unteren Bahn einklemmt.

## Revendications

1. Machine à rouler qui comporte une bande transporteuse sans fin (10) entraînée autour de rouleaux d'extrémité (15, 16), caractérisée en ce que le brin supérieur de la bande transporteuse est formé de façon à comporter une torsade en hélice complète (14).

2. Machine à rouler selon la revendication 1, dans laquelle un rouleau (20) est positionné au-dessous du brin supérieur de la bande transporteuse, et en contact avec lui, dans la position du point de départ de la torsade en hélice.

3. Machine à rouler selon la revendication 1, dans laquelle une roue réglable (24) exerce une pression vers le bas sur la surface supérieure du brin supérieur de la bande transporteuse dans la position du point de fin de la torsade en hélice.

4. Machine à rouler selon la revendication 3, dans laquelle la roue réglable est positionnée à proximité immédiate d'un bord latéral de la surface supérieure du brin supérieur de la bande transporteuse.

5. Machine à rouler selon la revendication 1, dans laquelle le brin inférieur de la bande transporteuse est également formé de façon à comporter une torsade en hélice complète (21) pour réorienter la bande.

6. Machine à rouler selon la revendication 5, dans laquelle deux rouleaux (22, 23) pincent les surfaces supérieure et inférieure du brin inférieur de la bande transporteuse dans la position du point de fin de la torsade en hélice.

7. Machine à rouler selon la revendication 1, dans laquelle des anneaux mobiles (25, 26) sont prévus sur chaque côté des rouleaux d'extrémité, lesquels servent à retenir la bande torsadée dans une position fixe et à permettre à la forme de la torsade de la bande d'être ajustée.

8. Machine à rouler selon la revendication 1, dans laquelle une seconde bande transporteuse sans fin (17) entraînée autour de rouleaux d'extrémité (18, 19) est prévue à l'intérieur de, et de manière à constituer une base mobile pour, la bande transporteuse sans fin dans laquelle est formée la torsade en hélice.

9. Machine à rouler selon la revendication 8, dans laquelle la seconde bande présente une surface sans frottement.

10. Procédé pour rouler un article (11), qui consiste à placer l'article sur le brin supérieur d'une bande transporteuse sans fin (10) à l'extrémité d'amont et à transporter l'article vers l'extrémité d'aval, caractérisé en ce que le brin supérieur de la bande transporteuse est formé de façon à comporter une torsade en hélice complète (14) afin que l'article passe dans la torsade en hélice et ressorte plié à l'extrémité d'aval.

11. Procédé selon la revendication 10, dans lequel la position du point de départ de la torsade en hélice sur le brin supérieur de la bande transporteuse est réglée par un rouleau (20) positionné au-dessous du brin supérieur de la bande transporteuse et en contact avec lui.

12. Procédé selon la revendication 10, dans lequel la position du point de fin de la torsade en hélice sur le brin supérieur de la bande transporteuse est réglée par une roue réglable (24) exerçant une pression vers le bas sur la surface supérieure du brin supérieur.

13. Procédé selon la revendication 10, dans lequel la bande est réorientée au moyen du brin inférieur qui est également formé de façon à comporter une torsade en hélice complète (21).

14. Procédé selon la revendication 13, dans lequel la position du point de fin de la torsade en hélice sur le brin inférieur est réglée par deux rouleaux (22, 23) pinçant les surfaces supérieure et inférieure du brin inférieur.
